(19) Europäisches Patentamt
European Patent Office
Office européen des brevets

(11) **EP 3 825 802 B1**

(12) **EUROPÄISCHE PATENTSCHRIFT**

(45) Veröffentlichungstag und Bekanntmachung des Hinweises auf die Patenterteilung:
**27.07.2022  Patentblatt 2022/30**

(21) Anmeldenummer: **20206835.9**

(22) Anmeldetag: **11.11.2020**

(51) Internationale Patentklassifikation (IPC):
**G05D 1/00** *(2006.01)*        **G05D 1/02** *(2020.01)*
**G06Q 10/00** *(2012.01)*        **G06Q 10/06** *(2012.01)*

(52) Gemeinsame Patentklassifikation (CPC):
**G05D 1/0016; G05D 1/0027; G05D 1/0291;**
**G06Q 10/06316;** G05D 2201/0201;
G05D 2201/0203; G05D 2201/0208

(54) **SYSTEM MIT MINDESTENS ZWEI SICH SELBSTTÄTIG FORTBEWEGENDEN BODENBEARBEITUNGSGERÄTEN SOWIE VERFAHREN ZUM BETRIEB DES SYSTEMS**

SYSTEM WITH AT LEAST TWO AUTOMATIC CLEANING ROBOTS AND METHOD OF OPERATING THE SAID SYSTEM

SYSTÈME COMPRENANT AU MOINS DEUX ROBOTS AUTONOMES DE NETTOYAGE ET PROCÉDÉ D'EXPLOITATION DU SYSTÈME

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.11.2019   DE 102019131583**

(43) Veröffentlichungstag der Anmeldung:
**26.05.2021   Patentblatt 2021/21**

(73) Patentinhaber: **Vorwerk & Co. Interholding GmbH**
**42275 Wuppertal (DE)**

(72) Erfinder:
• **Mosebach, Andrej**
**59425 Unna (DE)**

• **Papenheim, Marc**
**42349 Wuppertal (DE)**
• **Hayn, Henning**
**40723 Hilden (DE)**

(74) Vertreter: **Müller, Enno et al**
**Rieder & Partner mbB**
**Patentanwälte - Rechtsanwalt**
**Yale-Allee 26**
**42329 Wuppertal (DE)**

(56) Entgegenhaltungen:
**EP-A1- 3 385 811     DE-A1-102017 113 288**

## Beschreibung

### Gebiet der Technik

Die Erfindung betrifft ein System mit mindestens zwei sich selbsttätig fortbewegenden Bodenbearbeitungsgeräten zur automatisch gesteuerten Bearbeitung einer Fläche einer Umgebung, einer den Bodenbearbeitungsgeräten gemeinsam zugeordneten Recheneinrichtung, welche mindestens eine Einsatztätigkeit mindestens eines Bodenbearbeitungsgerätes nach definierten Regeln plant, und einer den Bodenbearbeitungsgeräten gemeinsam zugeordneten Datenbank, in welcher eine Umgebungskarte mit mehreren Flächenteilbereichen und die geplante Einsatztätigkeit gespeichert sind.

Daneben betrifft die Erfindung ein Verfahren zum Betrieb eines solchen Systems.

### Stand der Technik

Sich selbsttätig fortbewegende Bodenbearbeitungsgeräte sind im Stand der Technik beispielsweise als Saugroboter, Wischroboter, Polierroboter oder andere bekannt. Die Bodenbearbeitungsgeräte weisen beispielsweise Reinigungselemente wie Bürsten, Wischelemente, Polierelemente, Schleifelemente oder ähnliches auf. Des Weiteren ist es im Stand der Technik bekannt, Bodenbearbeitungsgeräte automatisch zu steuern, um Bodenbearbeitungstätigkeiten auszuführen, bei welchen das Bodenbearbeitungsgerät eine Fläche bearbeitet.

Es ist des Weiteren bekannt, mehrere sich selbsttätig fortbewegende Bodenbearbeitungsgeräte innerhalb eines Systems zu verwenden, wobei das System des Weiteren eine gemeinsame Recheneinrichtung sowie eine gemeinsame Datenbank für die Bodenbearbeitungsgeräte zur Verfügung stellt.

Die DE 10 2017113 288 A1 (auch veröffentlicht als US 2018/0361569 A1) offenbart ein System mit mehreren Bodenbearbeitungsgeräten zur automatisch gesteuerten Bearbeitung einer Fläche, wobei eine den Bodenbearbeitungsgeräten gemeinsam zugeordnete Datenbank nach definierten Regeln geplante Einsatztätigkeiten für die Bodenbearbeitungsgeräte aufweist. Die Einsatztätigkeiten werden von einer zentralen Recheneinrichtung des Systems automatisch geplant, beispielsweise in Abhängigkeit von einer durch ein Bodenbearbeitungsgerät detektierten Verschmutzung eines Teilbereiches einer Fläche. Die EP 33 85 811 A1 offenbart ein Robotersystem mit einer Mehrzahl von Robotern. Jeder Roboter ist einem Reinigungsbereich zugeordnet. Basierend auf einem Steuerbefehl zur Reinigung eines dringenden Bereiches fährt ein bestimmter Roboter in den dringenden Bereich, reinigt dort und fährt dann in den ihm zugeordneten Bereich zurück.

### Zusammenfassung der Erfindung

Ausgehend von dem vorgenannten Stand der Technik ist es Aufgabe der Erfindung, ein System mit mindestens zwei sich selbsttätig fortbewegenden Bodenbearbeitungsgeräten sowie einer diesen gemeinsam zugeordneten Recheneinrichtung und Datenbank zu schaffen, welches auch individuelle Anfragen eines Nutzers bezüglich einer Bodenbearbeitungstätigkeit berücksichtigen kann.

Zur Lösung der vorgenannten Aufgabe wird vorgeschlagen, dass den Flächenteilbereichen zugehörig eine Teilbereichsbezeichnung und/ oder eine Bodenartbezeichnung gespeichert ist, wobei die Recheneinrichtung eingerichtet ist, einen Bodenbearbeitungsbefehl von einem Nutzer des Systems zu empfan gen, welcher Bodenbearbeitungsbefehl einerseits eine Angabe einer auszuführenden Bodenbearbeitungstätigkeit und andererseits eine Teilbereichsbezeichnung und/ oder Bodenartbezeichnung aufweist, wobei die Recheneinrichtung eingerichtet ist, zu der in dem Bodenbearbeitungsbefehl benannten Teilbereichsbezeichnung und/ oder Bodenartbezeichnung korrespondierende Flächenteilbereiche aus der Mehrzahl der in der Umgebungskarte enthaltenen Flächenteilbereiche zu ermitteln und die in dem Bodenbearbeitungsbefehl benannte Bodenbearbeitungstätigkeit nach den vordefinierten Regeln zur Ausführung durch mindestens ein Bodenbearbeitungsgerät zu planen, wobei die vordefinierten Regeln abhängig sind von einem Geräteparameter des Bodenbearbeitungsgerätes und einer Position des zu bearbeitenden Flächenteilbereiches in der Umgebung.

Erfindungsgemäß ist das System somit ausgestaltet, einen individuellen Bodenbearbeitungsbefehl eines Nutzers zu erhalten und in Bezug auf eine gewünschte Bodenbearbeitungstätigkeit in einem definierten Flächenteilbereich der Umgebung zu analysieren. Zu diesem Zweck ist die Recheneinrichtung des Systems ausgebildet, den Bodenbearbeitungsbefehl auf darin enthaltene Teilbereichsbezeichnungen und/oder Bodenartbezeichnungen sowie die Angabe einer Bodenbearbeitungstätigkeit zu prüfen. Dafür vergleicht die Recheneinrichtung die in der Datenbank gespeicherten Teilbereichsbezeichnungen und Bodenartbezeichnungen mit dem Inhalt des Bodenbearbeitungsbefehls. Sofern eine oder mehrere Übereinstimmungen gefunden werden, ermittelt die Recheneinrichtung, welche in der Umgebungskarte verzeichneten Flächenteilbereiche die jeweilige Teilbereichsbezeichnung bzw. Bodenart aufweisen. Anschließend plant die Recheneinrichtung die durch den Nutzer mittels des Bodenbearbeitungsbefehls angeforderte Bodenbearbeitungstätigkeit für diejenigen Flächenteilbereiche, welche die genannte Teilbereichsbezeichnung aufweisen und/ oder die bezeichnete Bodenart beinhalten. Die Planung der Bodenbearbeitungstätigkeit durch die Recheneinrichtung beinhaltet die Auswahl eines oder mehrerer Bodenbearbeitungsgeräte des Systems, wobei die Auswahl nach vordefinierten Regeln erfolgt, welche einerseits von den Geräteparametern der zur Verfügung stehenden Bodenbearbeitungsgeräte, und andererseits von einem Ort des zu bearbeitenden Flächenteilbereiches abhängig sind. Die in dem System vernetzten Bodenbearbeitungsgeräte werden somit durch von einem Nutzer geäußerte Befehle anhand verschiedener Parameter gesteuert. Die Recheneinrichtung nutzt einen mathematischen Algorithmus, um für eine auszuführende Bodenbearbeitungstätigkeit ein oder mehrere bestmöglich geeignete Bodenbearbeitungsgeräte zu ermitteln, wobei ein solches Bodenbearbeitungsgerät von der Recheneinrichtung zur Ausführung der Bodenbearbeitungstätigkeit eingeplant wird, dessen Geräteparameter und Position relativ zu der Position des zu bearbeitenden Flächenteilbereiches bestmöglich ist. Dabei können zur Ausführung der Bodenbearbeitungstätigkeit mehrere Bodenbearbeitungsgeräte geplant werden, die in einer bestimmten Rangfolge zur Ausführung der Bodenbearbeitungstätigkeit bestimmt sind. Dabei kann die Recheneinrichtung eine Priorisierung festlegen, welche ein bestmöglich geeignetes Bodenbearbeitungsgerät als erstes einplant und in der Rangfolge dahinter weitere Bodenbearbeitungsgeräte, deren Geräteparameter und/oder Positionen beispielsweise weniger optimal für eine erfolgreiche Ausführung der Bodenbearbeitungstätigkeit sind, als diejenigen des zuerst priorisierten Bodenbearbeitungsgerätes mit höherem Rang. Diejenigen Bodenbearbeitungsgeräte des Systems, welche eine geringere Priorisierung aufweisen, als das zuerst genannte Bodenbearbeitungsgerät können für den Fall vorgesehen sein, dass das favorisierte Bodenbearbeitungsgerät nicht zur Verfügung steht, weil dieses beispielsweise während der Ausführung der Bodenbearbeitungstätigkeit feststeckt oder gerade eine andere Tätigkeit ausführt. Unabhängig von einer Priorisierung mehrerer Bodenbearbeitungsgeräte zur Ausführung derselben Bodenbearbeitungstätigkeit kann auch eine zeitliche Rangfolge der Bodenbearbeitungsgeräte für nacheinander auszuführende Bodenbearbeitungstätigkeiten festgelegt werden, wobei ein erstes Bodenbearbeitungsgerät eine zuerst durchzuführende Bodenbearbeitungstätigkeit ausführt und ein zweites Bodenbearbeitungsgerät erst zeitlich danach Anwendung findet, um die Bodenbearbeitungstätigkeit entweder fortzusetzen oder eine nachfolgende Bodenbearbeitungstätigkeit auszuführen.

Im Sinne der Erfindung wird unter einer Teilbereichsbezeichnung ein Name für einen bestimmten Flächenteilbereich der Umgebung verstanden, welcher zum Beispiel einer bestimmten Raumbezeichnung einer Wohnung entsprechen kann, beispielsweise Wohnzimmer, Schlafzimmer, Badezimmer, Flur, aber auch Kaminbereich, Hundeecke, Kinderspielbereich oder ähnliches. Die Flächenteilbereiche müssen dabei nicht ganzen Räumen eines Wohnungsgrundrisses entsprechen. Auch entsprechende Teilbereiche eines Raumes sind Flächenteilbereiche, die ebenfalls eine Teilbereichsbezeichnung erhalten können. Eine Bodenartbezeichnung im Sinne der Erfindung ist beispielsweise die Angabe, ob ein Flächenteilbereich einen Hartboden, Teppichboden oder Teppich aufweist. Daneben können die Bodenarten auch weiter unterteilt sein, insbesondere in langflorige Teppichböden, kurzflorige Teppichböden, Fliesenboden, Holzboden, Laminat, Kork, PVC und weitere. Bodenbearbeitungstätigkeiten im Sinne der Erfindung können unter anderem Saugen, Fegen, Wischen, Polieren, Schleifen, Ölen, Imprägnieren oder andere sein.

Insbesondere wird vorgeschlagen, dass der von dem Nutzer geäußerte Bodenbearbeitungsbefehl eine aus mehreren Wörtern bestehende Aufforderung, insbesondere ein Sprachbefehl, ist, wobei die Recheneinrichtung eingerichtet ist, aus dem Bodenbearbeitungsbefehl einerseits die Angabe der Bodenbearbeitungstätigkeit, und andererseits die Teilbereichsbezeichnung und/oder die Bodenartbezeichnung, sowie gegebenenfalls einen die Bodenbearbeitung betreffenden Zeitpunkt, zu entnehmen. Der Nutzer des erfindungsgemäßen Systems kann einen Bodenbearbeitungsbefehl schriftlich oder mündlich an die Recheneinrichtung übermitteln. Dazu kann das System beispielsweise über eine Spracherkennungssoftware verfügen, die den Bodenbearbeitungsbefehl empfangen und analysieren kann. Alternativ oder zusätzlich kann das System auch eine Nutzerschnittstelle aufweisen, die geeignet ist, einen schriftlichen Bodenbearbeitungsbefehl von dem Nutzer zu erhalten. Beispielsweise kann das System ein mobiles Endgerät des Nutzers beinhalten, insbesondere ein Mobiltelefon, einen Tablet-Computer, ein Laptop oder ähnliches, mittels welchem der Nutzer den Bodenbearbeitungsbefehl übermitteln kann. Die Komponenten des Systems, nämlich die Bodenbearbeitungsgeräte, die Recheneinrichtung, die Datenbank sowie auch gegebenenfalls ein Endgerät zum Empfangen des Bodenbearbeitungsbefehls des Nutzers sind vorzugsweise innerhalb eines drahtlosen Kommunikationsnetzwerkes miteinander vernetzt, beispielsweise innerhalb eines WLAN. Der Bodenbearbeitungsbefehl des Nutzers beinhaltet zu einer Aufforderung kombinierte Wörter, die einerseits einen Teilbereich und/ oder eine Bodenart bezeichnen, die bearbeitet werden sollen, und andererseits eine auszuführende Bodenbearbeitungstätigkeit. Die Recheneinrichtung zerlegt den Bodenbearbeitungsbefehl, beispielsweise mittels eines Parsers, in die Bestandteile Teilbereichsbezeichnung und/ oder Bodenartbezeichnung und Bodenbearbeitungstätigkeit, um eine gewünschte Bodenbearbeitungstätigkeit zur Ausführung durch mindestens ein Bodenbearbeitungsgerät des Systems planen zu können. Wenn der Nutzer nun einen Sprachbefehl oder eine Texteingabe an die Recheneinrichtung des Systems übermittelt, beispielsweise die Aufforderung "Sauge die Küche", dann ermittelt die Recheneinrichtung des Systems einerseits die Teilbereichsbezeichnung "Küche" und andererseits die Bodenbearbeitungstätigkeit "Sauge". Sodann ermittelt die Recheneinrichtung, welches Bodenbearbeitungsgerät bzw. gegebenenfalls welche Bodenbearbeitungsgeräte, optimal geeignet sind, diesen Flächenteilbereich zu bearbeiten. Des Weiteren kann der Bodenbearbeitungsbefehl des Nutzers auch eine Zeitangabe enthalten, insbesondere einen Zeitpunkt, zu welchem die Bodenbearbeitung gestartet werden soll oder beendet sein soll. Grundsätzlich kann der Nutzer durch den Bodenbearbeitungsbefehl auch andere Angaben übermitteln, beispielsweise eine gewünschte Bodenbearbeitungsintensität, Bodenbearbeitungsdauer oder anderes.

Es wird vorgeschlagen, dass der Geräteparameter des Bodenbearbeitungsgerätes ein für eine definierte Bodenbearbeitungstätigkeit ausgebildetes Bodenbearbeitungselement, eine Gerätegröße, ein Ladezustand eines Akkumulators, eine Leistungsstufe eines Elektromotors, eine Aufnahmekapazität eines Sammelbehälters und/ oder eine Reichweite, Fortbewegungsgeschwindigkeit oder Kletterfähigkeit des Bodenbearbeitungsgerätes ist. Zur Planung der in dem System vorhandenen Bodenbearbeitungsgeräte zur Ausführung der von dem Nutzer gewünschten Bodenbearbeitungstätigkeit werden somit Eigenschaften der Bodenbearbeitungsgeräte berücksichtigt, die insbesondere durch die Art des jeweiligen Bodenbearbeitungsgerätes begründet sind. Dazu zählen einerseits äußere Eigenschaften des Bodenbearbeitungsgerätes, insbesondere beispielsweise eine Größe, Breite, Höhe, Formgebung, ein Bodenabstand, ein Gewicht des Bodenbearbeitungsgerätes. Darüber hinaus können die Geräteparameter jedoch auch Parameter von Reinigungselementen sein, die Komponenten des Bodenbearbeitungsgerätes bilden, beispielsweise Bodenbearbeitungselemente wie Reinigungsbürsten, Wischelemente, Polieraufsätze oder ähnliches. Zudem können Eigenschaften eines Akkumulators, insbesondere ein Ladezustand des Akkumulators, oder eine Leistungsstufe eines Elektromotors berücksichtigt werden. In Bezug auf als Saugreinigungsgeräte ausgebildete Bodenbearbeitungsgeräte kann ein Geräteparameter eine maximale Aufnahmekapazität eines Sammelbehälters für Sauggut, eine aktuelle Belegung des Sammelbehälters, eines Filterelementes oder ähnliches sein. Darüber hinaus sind auch besondere Fähigkeiten des Bodenbearbeitungsgerätes von Interesse, beispielsweise eine insbesondere durch einen Ladezustand eines Akkumulators bedingte Reichweite des Bodenbearbeitungsgerätes, eine Kletterfähigkeit des Bodenbearbeitungsgerätes, eine Fortbewegungsgeschwindigkeit des Bodenbearbeitungsgerätes oder andere.

Darüber hinaus kann vorgesehen sein, dass das zur Ausführung der Bodenbearbeitungstätigkeit bestimmte Bodenbearbeitungsgerät abhängig von einer Entfernung und/oder einem Höhenunterschied zwischen einem Ort des zu bearbeitenden Flächenteilbereiches und einer aktuellen Position des Bodenbearbeitungsgerätes ausgewählt ist. Der Höhenunterschied zwischen dem Zielort und dem aktuellen Ort des Bodenbearbeitungsgerätes kann durch unterschiedliche Stockwerke eines Gebäudes bedingt sein, d. h. wenn das Bodenbearbeitungsgerät auf seinem Weg zu dem Zielort eine Gebäudeetage wechseln oder auch einen Treppenabsatz überwinden muss, oder ähnliches. Bei der Auswahl eines geeigneten Bodenbearbeitungsgerätes für die auszuführende Bodenbearbeitungstätigkeit wird somit die Position des Bodenbearbeitungsgerätes in Relation zu der Position des zu bearbeitenden Flächenteilbereiches berücksichtigt, dabei beispielsweise auch, ob grundsätzlich geeignete Bodenbearbeitungsgeräte auf einer gleichen zusammenhängenden Höhenebene positioniert sind wie der zu bearbeitende Flächenteilbereich, oder ob diese alternativ die Fähigkeit besitzen, einen Höhenunterschied zu überwinden. Bodenbearbeitungsgeräte, die sich beispielsweise in einem anderen Stockwerk eines Gebäudes befinden als der zu bearbeitende Flächenteilbereich, können diese Bodenbearbeitungstätigkeit zwar grundsätzlich ausführen, sind aber nicht in der Lage, den Höhenunterschied zu überwinden und können daher nicht zur Ausführung der Bodenbearbeitungstätigkeit eingeplant werden.

Insgesamt wird somit erreicht, dass ein oder mehrere Bodenbearbeitungsgeräte, die gleichartig oder auch verschiedenartig sein können, zur Bearbeitung eines oder mehrerer Flächenteilbereiche zugeordnet werden. Bei der Zuordnung werden einerseits Geräteparameter, andererseits jedoch auch Umgebungsparameter berücksichtigt. Zu den Geräteeigenschaften gehören beispielsweise charakteristische Ausbildungen des Bodenbearbeitungsgerätes, die zur Ausführung einer bestimmten Bodenbearbeitungstätigkeit besonders geeignet sind. Zu den Umgebungsparametern gehört der Abstand des Bodenbearbeitungsgerätes zu dem gewünschten zu bearbeitenden Flächenteilbereich. Die Festlegung einer Rangfolge der Bodenbearbeitungsgeräte zur Bearbeitung desselben Flächenteilbereiches erfolgt anhand eines von der Recheneinrichtung ausgeführten Algorithmus, wobei auch Wünsche des Nutzers bezüglich des Startzeitpunkts, Endzeitpunkts oder auch einer Dauer der Bodenbearbeitung berücksichtigt werden können. Optional ist eine Aufteilung eines Flächenteilbereiches in Unterbereiche möglich, welchen verschiedene Bodenbearbeitungsgeräte zugeordnet werden können. Eine solche Aufteilung kann erfolgen, wenn beispielsweise ein und derselbe Raum, beispielsweise ein Wohnzimmer, einerseits einen Hartboden und andererseits auf dem Hartboden liegende Teppiche aufweist. Den Unterbereichen können verschiedene Bodenbearbeitungstätigkeiten, beispielsweise Trockenreinigung, Feuchtreinigung, Überbodenreinigung oder ähnliches zugeordnet werden. Bei der Auswahl eines geeigneten Bodenbearbeitungsgerätes zur Durchführung einer Bodenbearbeitungstätigkeit kann auch eine aktuelle Position des Nutzers berücksichtigt werden, beispielsweise können in demjenigen Flächenteilbereich, in welchem sich zur Zeit der Nutzer aufhält, solche Bodenbearbeitungsgeräte bevorzugt Anwendung finden, welche besonders geräuscharm sind. Dabei kann ein aktueller Aufenthaltsort des Nutzers beispielsweise durch eine Detektionseinrichtung eines Bodenbearbeitungsgerätes ermittelt werden oder auch anhand eines Signals eines mobilen Endgerätes des Nutzers.

Es kann vorgesehen sein, dass die Datenbank des Systems Informationen zu den Flächenteilbereichen der Umgebung aufweist. Die Informationen zu den Flächenteilbereichen können dabei insbesondere eine Teilbereichsbezeichnung, eine Stockwerkinformation betreffend ein den Flächenteilbereich aufweisendes Stockwerk eines Gebäudes, eine Bodenartbezeichnung und/ oder eine Flächengröße des Flächenteilbereiches sein. Die Teilbereichsbezeichnung kann eine übliche Bezeichnung eines Raumes der Umgebung sein, beispielsweise Wohnzimmer, Badezimmer, Flur, Schlafzimmer, Kinderzimmer oder ähnliches. Alternativ ist es auch möglich, dass die Teilbereichsbezeichnung eine Raumnummerierung, ein Phantasiename, eine Zahl-Wort-Kombination oder ähnliches ist. Eine Stockwerkinformation kann beispielsweise eingeteilt sein in Keller, Erdgeschoss, erstes Obergeschoss, zweites Obergeschoss und dergleichen. Eine Bodenartbezeichnung kann wie zuvor bereits erläutert eine Bezeichnung wie Hartboden, Teppichboden, Teppich sein, oder auch feinere Einteilungen wie langfloriger Teppichboden, kurzfloriger Teppichboden und dergleichen. Eine Flächengröße des Flächenteilbereiches kann eine Flächenangabe in Quadratmetern oder anderen Einheiten angeben, oder alternativ beispielsweise eine Zuordnung in einen bestimmten Flächengrößenbereich, beispielsweise 0 bis 20 m$^2$, 20 bis 40 m$^2$, 40 bis 60 m$^2$ oder andere Aufteilungen.

Des Weiteren wird vorgeschlagen, dass die Datenbank des Weiteren eine Verschmutzungsinformation des Flächenteilbereiches und/oder eine Zeitangabe einer zuletzt in dem Flächenteilbereich ausgeführten Bodenbearbeitungstätigkeit und/oder eine Zeitangabe einer geplanten Bodenbearbeitungstätigkeit und/ oder eine geschätzte Ausführungszeitspanne für eine Ausführung einer Bodenbearbeitungstätigkeit und/oder eine Information über eine dem Flächenteilbereich zugeordnete Art der Bodenbearbeitungstätigkeit enthält. Die Datenbank enthält somit Angaben zu beispielsweise einem Verschmutzungsgrad eines bestimmten Teilbereiches. Dieser Verschmutzungsgrad kann beispielsweise eine Prozentangabe von 0 % bis 100 % sein, die beliebig klein oder groß unterteilt sein kann. Darüber hinaus kann die Datenbank auch die vorgeschlagenen zeitlichen Angaben enthalten, die von der Recheneinrichtung bei der Einplanung eines Bodenbearbeitungsgerätes für eine anstehende Bodenbearbeitungstätigkeit berücksichtigt werden können. Darüber hinaus enthält die Datenbank auch Informationen über eine einem bestimmten Flächenteilbereich zugeordnete Art einer Bodenbearbeitungstätigkeit. Einem Hartboden wird beispielsweise sowohl die Art "Trockenreinigung" als auch die Art "Nassreinigung" zugeordnet, während für einen Teppichboden nur die Option "Trockenreinigung" zur Verfügung steht, gegebenenfalls unterteilt in "Schonreinigung" oder "Intensivreinigung".

Die vorgeschlagene Datenbank kann des Weiteren den Flächenteilbereichen zugeordnet, eine oder mehrere zeitlich im Voraus geplante Bodenbearbeitungstätigkeiten eines oder mehrerer Bodenbearbeitungsgeräte enthalten. Die in die Datenbank eingetragenen geplanten Bodenbearbeitungstätigkeiten beschreiben das Ergebnis der Recheneinrichtung, nämlich eine Information über dasjenige Bodenbearbeitungsgerät oder diejenigen Bodenbearbeitungsgeräte, welche einem bestimmten Flächenteilbereich für eine bestimmte Bodenbearbeitungstätigkeit als optimal zugeordnet wurden. Dabei können die geplanten Bodenbearbeitungstätigkeiten für einen bestimmten Flächenteilbereich eine zeitliche Reihenfolge aufweisen, mit welcher die Bodenbearbeitungstätigkeiten nach Startzeitpunkten oder zumindest in Bezug auf eine zeitliche Rangfolge festgelegt sind.

Des Weiteren wird vorgeschlagen, dass die Recheneinrichtung eingerichtet ist, die Zuordnung des Bodenbearbeitungsgerätes zu einem Flächenteilbereich auf der Basis einer nach mathematischen Methoden ermittelten Kennzahl vorzunehmen, welche eine Eignung des Bodenbearbeitungsgerätes zur Ausführung der Bodenbearbeitungstätigkeit in dem Flächenteilbereich angibt. Die Recheneinrichtung verwendet einen Sortieralgorithmus, welcher eine Bearbeitung eines bestimmten Flächenteilbereiches der Umgebung durch ein oder mehrere Bodenbearbeitungsgeräte bestimmt. Dabei kann auch eine Bearbeitungsrangfolge mehrerer Bodenbearbeitungsgeräte ermittelt werden. Der Algorithmus basiert auf definierten Regeln zur Auswahl geeigneter Bodenbearbeitungsgeräte, welche Regeln beispielsweise unter anderem bestimmen können, dass ein Bodenbearbeitungsgerät für eine definierte Bodenbearbeitungstätigkeit an einem definierten Flächenteilbereich nur verwendet werden kann, wenn ein Pfad existiert, entlang welchem sich das Bodenbearbeitungsgerät dorthin bewegen kann. Ein solcher befahrbarer Pfad existiert beispielsweise nicht, wenn sich der zu bearbeitende Flächenteilbereich und das Bodenbearbeitungsgerät auf unterschiedlichen Gebäudeetagen befinden und das Bodenbearbeitungsgerät nicht in der Lage ist, eine Treppe hochzusteigen und/oder einen Aufzug zu nehmen und des Weiteren auch keine anderen Einrichtungen des Systems existieren, beispielsweise Drohnen, Hebewerkzeuge oder ähnliches, die das Bodenbearbeitungsgerät befördern können. Des Weiteren werden die Bodenbearbeitungsgeräte nach der Art der von diesen ausführbaren Bodenbearbeitungstätigkeit sortiert, wobei für eine bestimmte auszuführende Bodenbearbeitungstätigkeit all jene Bodenbearbeitungsgeräte unberücksichtigt bleiben, die eine Spezifikation bezüglich der Bodenbearbeitungsart nicht erfüllen können. Des Weiteren werden die Bodenbearbeitungsgeräte anhand ihrer aktuellen Entfernung zu dem zu bearbeitenden Flächenteilbereich sortiert, zusätzlich gegebenenfalls der Größe des zu bearbeitenden Flächenteilbereiches, dessen notwendiger Bearbeitungsintensität, die insbesondere beispielsweise von einem Verschmutzungsgrad abhängen kann. Des Weiteren können die Bodenbearbeitungsgeräte auch nach anderen Parametern sortiert werden, beispielsweise einem aktuellen Füllstand eines Akkumulators oder ähnlichem. Zusammengefasst wird das Sortieren der Bodenbearbeitungsgeräte somit in Abhängigkeit von Eigenschaften der Bodenbearbeitungsgeräte und auch äußeren Gegebenheiten der Umgebung durchgeführt. Als Resultat ermittelt die Recheneinrichtung dann eine Kennzahl, die eine Eignung des bestimmten Bodenbearbeitungsgerätes für eine bestimmte Bodenbearbeitungstätigkeit in einem bestimmten Flächenteilbereich angibt. Dabei kann vorgesehen sein, dass eine möglichst geringe Kennzahl eine bessere Eignung definiert als eine demgegenüber höhere Kennzahl.

Des Weiteren wird mit der Erfindung ein Verfahren zum Betrieb eines Systems vorgeschlagen, welches wie zuvor erläutert ausgebildet ist. Dabei gelten die zuvor in Bezug auf das System beschriebenen Merkmale und Vorteile entsprechend. Zur Vermeidung von Wiederholungen wird hier in Bezug auf das erfindungsgemäße Verfahren auf die Ausführungen zu dem beschriebenen System verwiesen.

**Kurze Beschreibung der Zeichnungen**

Im Folgenden wird die Erfindung anhand von Ausführungsbeispielen näher erläutert. Es zeigen:

Fig. 1         ein erfindungsgemäßes System,

Fig. 2         eine Umgebungskarte einer zu bearbeitenden Umgebung,

Fig. 3         eine Tabelle mit Informationen zu Flächenteilbereichen der Umgebung,

Fig. 4a-e    Veränderungen der in Fig. 3 dargestellten Tabelle abhängig von der Zuordnung von Bodenbearbeitungsgeräten zu Flächenteilbereichen.

**Beschreibung der Ausführungsformen**

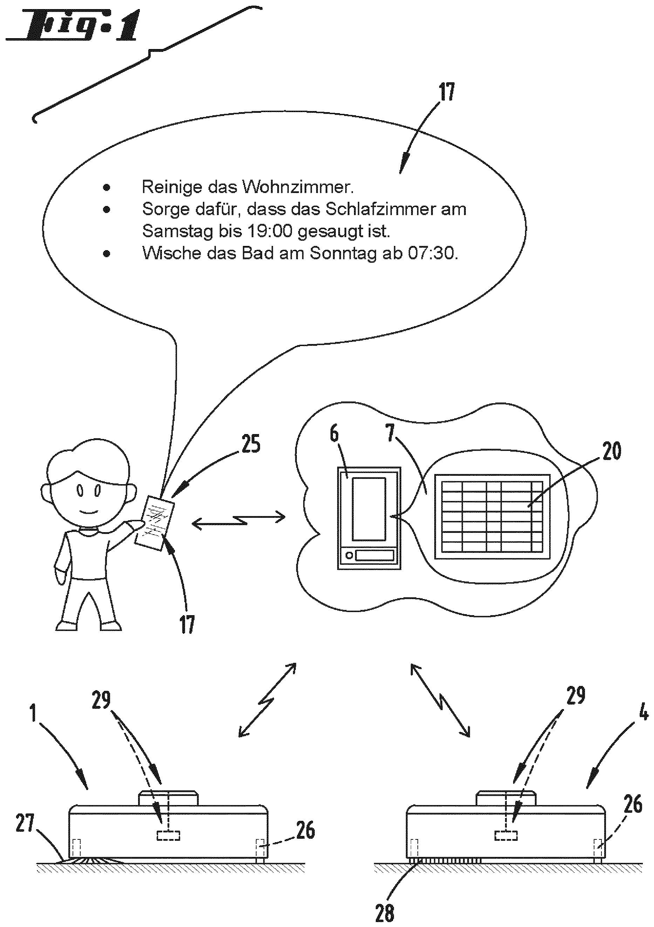

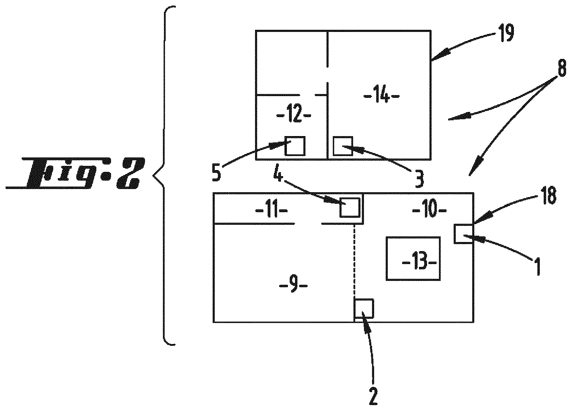

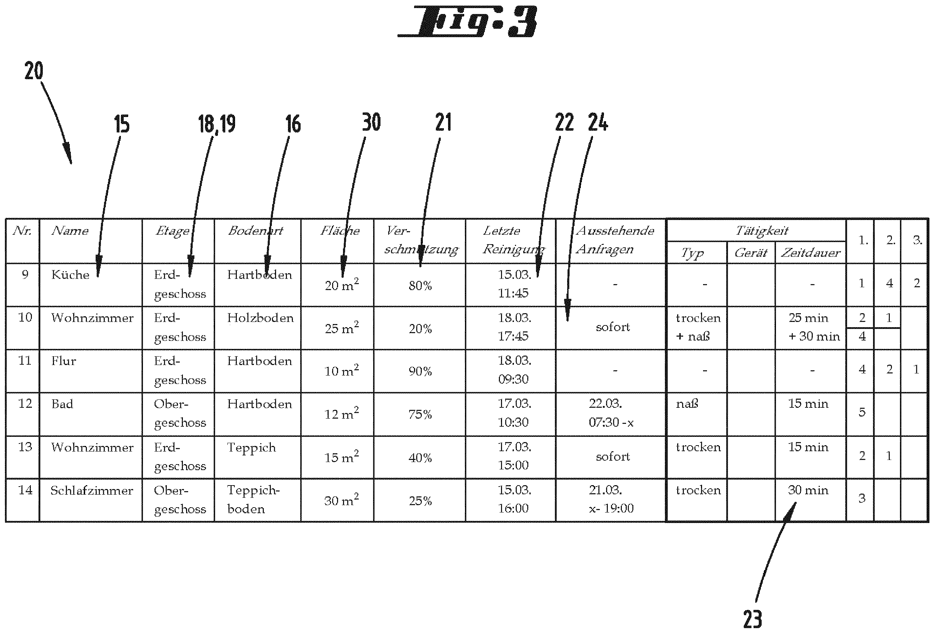

Figur 1 zeigt ein System mit zwei beispielhaft dargestellten Bodenbearbeitungsgeräten 1, 4, stellvertretend für weitere mögliche Bodenbearbeitungsgeräte 1 bis 5 (siehe Figur 2) des Systems. Das Bodenbearbeitungsgerät 1 ist beispielsweise ein sich selbsttätig fortbewegender Saugroboter, während das Bodenbearbeitungsgerät 4 ein sich selbsttätig fortbewegender Wischroboter ist. Zur selbsttätigen Fortbewegung besitzen die Bodenbearbeitungsgeräte 1 bis 5 Räder 26, die von einem nicht weiter dargestellten Antriebssystem angetrieben werden. Je nach dem Gerätetyp des Bodenbearbeitungsgerätes 1 bis 5 besitzt jedes Bodenbearbeitungsgerät 1 bis 5 unterschiedliche Bodenbearbeitungselemente. Dies sind hier bei dem Bodenbearbeitungsgerät 1 eine rotierende Bürste 27, sowie bei dem Bodenbearbeitungsgerät 4 ein vorzugsweise schwingendes Wischelement 28. Die Bodenbearbeitungsgeräte 1 bis 5 weisen jeweils einen nicht dargestellten lokalen Speicher auf, in welchem eine Umgebungskarte 8 der Umgebung gespeichert ist. Anhand der Umgebungskarte 8 kann sich das Bodenbearbeitungsgerät 1 bis 5 bei einer selbsttätigen Fortbewegung in der Umgebung orientieren und selbstlokalisieren. Für die Elektroversorgung der einzelnen elektrischen Verbraucher der Bodenbearbeitungsgeräte 1 bis 5, wie beispielsweise für das Antriebssystem weisen die Bodenbearbeitungsgeräte 1 bis 5 jeweils einen nicht dargestellten, wiederaufladbaren Akkumulator auf.
Die Bodenbearbeitungsgeräte 1 bis 5 sind des Weiteren jeweils mit einer Navigations- und Selbstlokalisationseinrichtung 29 ausgestattet. Die Navigations- und Selbstlokalisationseinrichtung 29 verfügt über eine Detektionseinrichtung, beispielsweise eine Laserabstandsmesseinrichtung, die Abstände zu Objekten in der Umgebung messen kann. Die Detektionseinrichtung weist beispielsweise eine Laserdiode auf, deren emittierter Lichtstrahl aus einem Gehäuse des Bodenbearbeitungsgerätes 1 bis 5 herausgeführt und um eine in der gezeigten Orientierung des Bodenbearbeitungsgerätes senkrecht stehende Drehachse rotierbar ist. Dadurch ist insbesondere eine Rundum-Abstandsmessung um das Bodenbearbeitungsgerät 1 bis 5 möglich. Mit Hilfe der Detektionseinrichtung kann die Umgebung in einer bevorzugt horizontalen Ebene vermessen werden, d. h. in einer zu der zu bearbeitenden Fläche parallelen Ebene. Dadurch kann das Bodenbearbeitungsgerät 1 bis 5 unter Vermeidung von Kollisionen mit Hindernissen in der Umgebung verfahren. Die mittels der Detektionseinrichtung aufgenommenen Umgebungsdaten werden zur Erstellung einer lediglich beispielhaft in Figur 2 dargestellten Umgebungskarte 8 genutzt. Des Weiteren kann das Bodenbearbeitungsgerät 1 bis 5 zur Navigation und Selbstlokalisierung beispielsweise einen nicht dargestellten Odometrie-Sensor aufweisen, welcher eine von dem Bodenbearbeitungsgerät 1 bis 5 zurückgelegte Wegstrecke misst. Des Weiteren ist es auch möglich, dass das Bodenbearbeitungsgerät 1 bis 5 beispielsweise einen oder mehrere Kontaktsensoren oder dergleichen aufweist.
Die Bodenbearbeitungsgeräte 1 bis 5 stehen hier über eine drahtlose Kommunikationsverbindung, vorzugsweise WLAN, in Kommunikationsverbindung mit einer zentralen Recheneinrichtung 6, welche sich hier beispielsweise in einer sogenannten Cloud befindet. Der Recheneinrichtung 6 ist eine Datenbank 7 zugeordnet, welche eine später mit Bezug zu Figur 3 noch näher erläuterte Tabelle 20 enthält. Teilnehmer des drahtlosen Kommunikationsnetzwerkes ist des Weiteren auch ein mobiles Endgerät 25 eines Nutzers, welches hier beispielsweise ein Mobiltelefon ist, auf dem eine Applikation installiert ist. Über das Endgerät 25 kann der Nutzer Bodenbearbeitungsbefehle 17 für eines oder mehrere der Bodenbearbeitungsgeräte 1 bis 5 übermitteln. Hier äußert der Nutzer beispielsweise insgesamt drei Bodenbearbeitungsbefehle 17, nämlich "Reinige das Wohnzimmer", "Sorge dafür, dass das Schlafzimmer am Samstag bis 19:00 Uhr gesaugt ist" und "Wische das Bad am Sonntag ab 07:30 Uhr". Die Bodenbearbeitungsbefehle 17 des Nutzers enthalten Aufforderungen zur Bearbeitung von Flächenteilbereichen 9 bis 14 der Umgebung, hier beispielsweise "Wohnzimmer", "Schlafzimmer" und "Bad", sowie die Art der auszuführenden Bodenbearbeitungtätigkeit, nämlich hier "Reinigen", "Saugen" und "Wischen". Die Bodenbearbeitungtätigkeit "Reinigen" kann dabei je nach der Art des zu bearbeitenden Bodenbelages des betroffenen Flächenteilbereiches 9 bis 14 eine Trockenreinigung und/oder eine Wischreinigung umfassen. Insofern ist der Bodenbearbeitungsbefehl 17 "Reinigen" allgemeiner als die Aufforderungen "Saugen" und "Wischen". Sofern die Art des Bodenbelages in demjenigen Flächenteilbereich 9 bis 14 grundsätzlich beide Bodenbearbeitungtätigkeiten zulässt, wird gemäß der hier vorliegenden Ausführung sowohl ein Saugen, als auch ein Wischen ausgeführt.

Die Recheneinrichtung 6 formuliert aus den Bodenbearbeitungsbefehlen 17 des Nutzers eine Planung für Bodenbearbeitungtätigkeiten, die in der Datenbank 7, nämlich der Tabelle 20, festgehalten werden. Während einer Fortbewegung greifen die Bodenbearbeitungsgeräte 1 bis 5 auf eine gemeinsame Umgebungskarte 8 (siehe Figur 2) zu, welche vorzugsweise ebenfalls in der zentralen Recheneinrichtung 6 gespeichert und auf der Basis der lokalen Karten der einzelnen Bodenbearbeitungsgeräte 1 bis 5 erstellt ist.

Figur 2 zeigt die gemeinsame Umgebungskarte 8, die den Bodenbearbeitungsgeräten 1 bis 5 in der Datenbank 7 zur Verfügung steht. Die gemeinsame Umgebungskarte 8 bildet hier beispielsweise zwei verschiedene Stockwerke 18, 19 eines Hauses ab, wobei das Stockwerk 18 ein Erdgeschoss betrifft und das Stockwerk 19 ein Obergeschoss. In den Stockwerken 18, 19 befinden sich eine Vielzahl von Flächenteilbereichen 9 bis 14, welche einerseits Räumen der Stockwerke 18, 19 entsprechen, jedoch andererseits auch Bereiche von Räumen sein können. Die Unterteilung erfolgt mittels der Recheneinrichtung 6 in sinnvolle Flächenteilbereiche 9 bis 14, die Teilbereiche mit unterschiedlich zu bearbeitendem Bodenbelag betreffen, hier beispielsweise Hartboden, Holzboden, Teppichboden und Teppich. In der dargestellten Umgebungskarte 8 sind die Positionen von insgesamt fünf Bodenbearbeitungsgeräten 1 bis 5 markiert, wobei die Bodenbearbeitungsgeräte 1, 2, 3 Saugroboter und die Bodenbearbeitungsgeräte 4 und 5 Wischroboter sind. Die Flächenteilbereiche 9 bis 14 sind beispielsweise eine Küche als Flächenteilbereich 9, ein Holzboden eines Wohnzimmers als Flächenteilbereich 10, ein Flur als Flächenteilbereich 11, ein Badezimmer als Flächenteilbereich 12, ein Teppich des Wohnzimmers als Flächenteilbereich 13 und ein Schlafzimmer als Flächenteilbereich 14. Die Flächenteilbereiche 9 bis 14 der Umgebungskarte 8 wurden zuvor durch die einzelnen Bodenbearbeitungsgeräte 1 bis 5 erfasst und zu der gemeinsamen Umgebungskarte 8 zusammengefasst, wobei die aktuellen Positionen der Bodenbearbeitungsgeräte 1 bis 5 in der Umgebungskarte 8 verzeichnet sind. Sofern ein Bodenbearbeitungsgerät 1 bis 5 für eine Bodenbearbeitungtätigkeit ausgewählt wird, kann ein Abgleich von Sensordaten des jeweiligen Bodenbearbeitungsgerätes 1 bis 5 mit den Daten der Umgebungskarte 8 durchgeführt werden. Sofern die Daten annähernd gleich sind, befindet sich das Bodenbearbeitungsgerät 1 bis 5 tatsächlich an der in der Umgebungskarte 8 dargestellten Position.

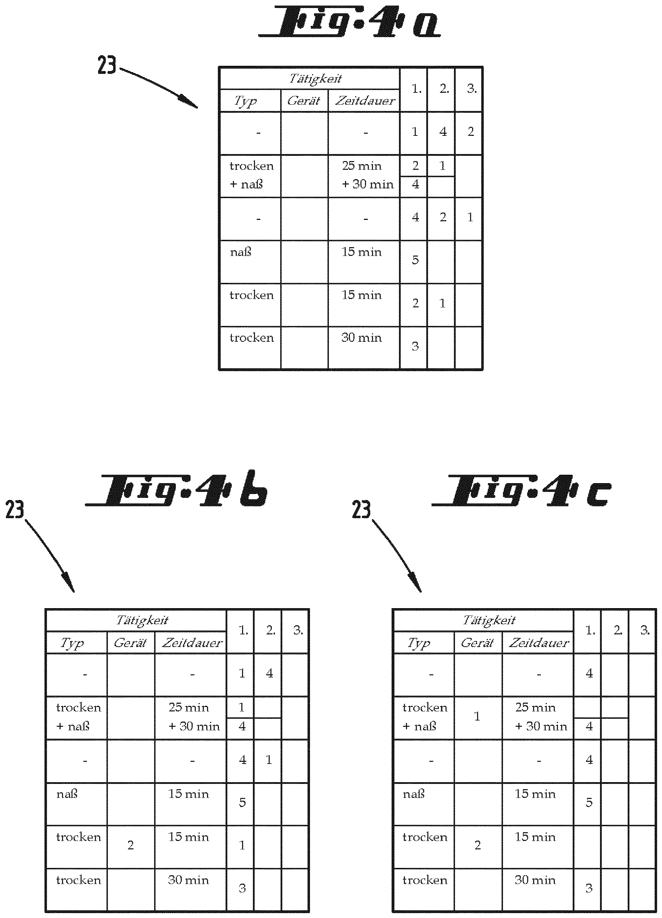

Figur 3 zeigt im Einzelnen die in der Datenbank 7 gespeicherte Tabelle 20, welche detaillierte Informationen zu den Flächenteilbereichen 9 bis 14 der Umgebung aufweist. Die Informationen werden zum Teil automatisch von der Recheneinrichtung 6 aus der Umgebungskarte 8 übernommen, und zum Teil manuell von einem Nutzer über das Endgerät 25 an die Recheneinrichtung 6 übermittelt. Die Recheneinrichtung 6 vervollständigt die Tabelle 20 dann entsprechend. Im Einzelnen enthält die Tabelle 20 eine Vielzahl von Spalten, die jeweils unterschiedliche Eigenschaften der Flächenteilbereiche 9 bis 14 sowie eine Planung von Bodenbearbeitungtätigkeiten zur Ausführung durch die Bodenbearbeitungsgeräte 1 bis 5 beinhalten. Von links nach rechts zeigt die beispielhaft dargestellte Tabelle 20 in der ersten Spalte die hier verwendete Nummerierung für die einzelnen Flächenteilbereiche 9 bis 14. Die Spalte "Name" beinhaltet Teilbereichsbezeichnungen 15 für die Flächenteilbereiche 9 bis 14 der Umgebungskarte 8, nämlich hier die Teilbereichsbezeichnungen 15 "Küche", "Wohnzimmer", "Flur", "Bad" und "Schlafzimmer". Selbstverständlich sind auch weitere Namen denkbar, beispielsweise muss die Teilbereichsbezeichnung 15 nicht einer Raumbezeichnung entsprechen, sondern kann beispielsweise auch einen Unterbereich eines Raumes definieren, beispielsweise "Kaminecke", "Hundeecke" und dergleichen. Die Spalte "Etage" beinhaltet die Angabe des Stockwerkes 18,19, in welchem sich der Flächenteilbereich 9 bis 14 befindet, hier das Stockwerk 18 "Erdgeschoss" und das Stockwerk 19 "Obergeschoss". Die Spalte "Bodenart" beinhaltet eine Bodenartbezeichnung 16 für die in dem jeweiligen Flächenteilbereich 9 bis 14 vorhandene Bodenart, beispielsweise unterschieden in "Hartboden", "Holzboden", "Teppich" und "Teppichboden". Zu den Hartböden zählt beispielsweise ein Fliesenboden. Holzböden haben hier eine eigene Bodenartbezeichnung 16, da diese in Bezug auf Feuchtigkeit anders zu behandeln sind als Fliesenböden. Die Bodenarten "Teppich" und "Teppichboden" unterscheiden sich ebenfalls voneinander, da Teppiche im Gegensatz zu fest verlegten Teppichböden die Eigenschaft aufweisen können, durch ein Bodenbearbeitungsgerät 1 bis 5 verschoben zu werden, insbesondere dann, wenn der Teppich besonders leicht oder klein ist. Die Spalte "Fläche" beinhaltet eine Flächeninformation 30 über die Größe des betrachteten Flächenteilbereiches 9 bis 14. Hier ist die Flächeninformation 30 in Quadratmetern angegeben. Selbstverständlich ist die Angabe auch in abweichenden Einheiten möglich. Auch könnte eine Einteilung in Kategorien wie "klein", "mittel" und "groß" erfolgen. Die Spalte "Verschmutzung" beinhaltet eine Verschmutzungsinformation 21 betreffend das Maß einer Verschmutzung des jeweiligen Flächenteilbereiches 9 bis 14. Hier ist die Verschmutzungsinformation 21 als Prozentsatz einer als maximal definierten Verschmutzung angegeben. Ein Verschmutzungsgrad von 0 % entspricht dabei einem optimal gereinigten Flächenteilbereich 9 bis 14, während eine Verschmutzung von 100 % einer so definierten maximal möglichen Verschmutzung entspricht. Die Spalte "Letzte Reinigung" enthält eine Zeitangabe 22, die darüber informiert, wann der jeweilige Flächenteilbereich 9 bis 14 zuletzt gereinigt wurde. Die Zeitangabe 22 beinhaltet hier ein Datum sowie eine Uhrzeit. Die Spalte "Ausstehende Anfragen" beinhaltet eine Zeitangabe 24, die den geplanten Zeitpunkt einer Bodenbearbeitungtätigkeit definiert. Sofern ein Nutzer bereits einen oder mehrere Bodenbearbeitungsbefehle 17 an die Recheneinrichtung 6 übermittelt hat, sind in dieser Spalte die geplanten Termine für Bodenbearbeitungstätigkeiten eingetragen, nämlich die Angabe "sofort" für Bodenbearbeitungstätigkeiten, welchen der Nutzer keinen bestimmten Ausführungszeitpunkt zugeordnet hat und die Angabe eines Datums und/ oder einer Uhrzeit für Bodenbearbeitungsbefehle 17 des Nutzers, welche ein konkretes Datum und/oder eine konkrete Uhrzeit beinhalten. Die von dem Nutzer betreffend den Flächenteilbereich 12 "Bad" und den Flächenteilbereich 14 "Schlafzimmer" geäußerten Bodenbearbeitungsbefehle 17 sind entsprechend mit Zeitangaben 24 in der Tabelle eingetragen. Die rechts neben der Spalte "Ausstehende Anfragen" aufgeführten Spalten (siehe markierten Rahmen; entspricht auch Figur 4a) beziehen sich auf die Zuordnung von Bodenbearbeitungsgeräten 1 bis 5 für die Bodenbearbeitung der jeweiligen Flächenteilbereiche 9 bis 14. Die Spalte "Typ" betrifft die in dem jeweiligen Flächenteilbereich 9 bis 14 auszuführende Art einer Bodenbearbeitungstätigkeit, nämlich entweder eine Trockenreinigung oder eine Nassreinigung, wobei ein und demselben Flächenteilbereich 9 bis 14 auch sowohl eine Trockenreinigung als auch eine Nassreinigung zugeordnet sein können. Dies betrifft beispielsweise den Flächenteilbereich 10 "Wohnzimmer", dessen Holzboden zunächst trocken und danach nass gereinigt werden soll. Die Spalte "Zeitdauer" gibt eine geschätzte Ausführungszeitspanne 23 zur Ausführung der Bodenbearbeitungstätigkeit in dem jeweiligen Flächenteilbereich 9 bis 14 mittels des zugeordneten Bodenbearbeitungsgerätes 1 bis 5 an. Die in der Tabelle 20 ganz rechts aufgelisteten drei Spalten "1., 2., 3." beinhalten eine Rangfolge der zur Ausführung der Bodenbearbeitungstätigkeit in dem jeweiligen Flächenteilbereich 9 bis 14 geeigneten Bodenbearbeitungsgeräte 1 bis 5, wobei ein am besten geeignetes Bodenbearbeitungsgerät 1 bis 5 an Stelle "1." steht und des Weiteren geeignete Bodenbearbeitungsgeräte 1 bis 5, welche die Bodenbearbeitungstätigkeit gegebenenfalls beispielsweise nur mit Einschränkungen erfüllen können, dahinter aufgelistet sind, nämlich in den Spalten "2." und "3.". In Bezug auf die Flächenteilbereiche 10, 13 "Wohnzimmer" hat der Nutzer den Bodenbearbeitungsbefehl 17 "Reinige das Wohnzimmer" übermittelt. Da der Flächenteilbereich 10 die Bodenart "Holzboden" aufweist, kann in diesem Flächenteilbereich 10 sowohl eine Trockenreinigung als auch anschließend eine Nassreinigung vorgenommen werden. Der Flächenteilbereich 13 mit der Bodenart "Teppich" ist nur für eine Trockenreinigung vorgesehen. Für die Trockenreinigungen sind hier die Bodenbearbeitungsgeräte 2 und 1 eingeplant. Für die Nassreinigung ist das Bodenbearbeitungsgerät 4 (Wischroboter) bestimmt.

Die Figuren 4a bis e zeigen den separat eingerahmten Ausschnitt der Tabelle 20 zu unterschiedlichen Zeitpunkten eines Planungsvorgangs für die Bodenbearbeitungstätigkeiten der Bodenbearbeitungsgeräte 1 bis 5. Im Folgenden wird hierzu näher ausgeführt.

Die Erfindung funktioniert gemäß dem lediglich beispielhaft dargestellten Ausführungsbeispiel so, dass der Nutzer wie erläutert seine Bodenbearbeitungsbefehle 17 mittels des Endgerätes 25 an die Recheneinrichtung 6 übermittelt. Die Recheneinrichtung 6 erstellt daraufhin aus der gemeinsamen Umgebungskarte 8 der Bodenbearbeitungsgeräte 1 bis 5 sowie den in den Bodenbearbeitungsbefehlen 17 enthaltenen Angaben die Tabelle 20. In dem dargestellten Ausführungsbeispiel benennt der Nutzer mit den Bodenbearbeitungsbefehlen 17 konkrete Räume. Es kann jedoch alternativ auch vorgesehen sein, dass der Nutzer allgemeiner formulierte Bodenbearbeitungsbefehle äußert, beispielsweise "Reinige alle Hartböden", so dass die Recheneinrichtung 6 alle Flächenteilbereiche 9 bis 14 ermitteln würde, die einen Hartboden beinhalten. Die Recheneinrichtung 6 filtert dazu aus dem Bodenbearbeitungsbefehl 17 sowohl eine Teilbereichsbezeichnung 15, als auch eine Bodenartbezeichnung 16 heraus. Ähnliches gilt für die Art der Bodenbearbeitungstätigkeit, nämlich hier enthalten in den Aufforderungen "Reinigen", "Saugen" und "Wischen".

Die von der Recheneinrichtung 6 erstellte Tabelle 20 dient der Koordination von Bodenbearbeitungstätigkeiten der Vielzahl der in dem System vorhandenen Bodenbearbeitungsgeräte 1 bis 5. Die Zuordnung eines bestimmten Bodenbearbeitungsgerätes 1 bis 5 zu einer Bodenbearbeitungstätigkeit in einem bestimmten Flächenteilbereich 9 bis 14 erfolgt durch einen von der Recheneinrichtung 6 ausgeführten Sortieralgorithmus, welcher unterschiedliche Geräteparameter der Bodenbearbeitungsgeräte 1 bis 5 sowie auch deren aktuelle Positionen in Relation zu dem zu bearbeitenden Flächenteilbereich 9 bis 14 berücksichtigt. Insbesondere ist es sinnvoll, die aktuelle Position der Bodenbearbeitungsgeräte 1 bis 5 in Relation zu dem Ort des zu bearbeitenden Flächenteilbereiches 9 bis 14 zu betrachten. Beispielsweise sind die Bodenbearbeitungsgeräte 1 bis 5 hier nicht ausgebildet, sich von einem Stockwerk 18 in das andere Stockwerk 19, und umgekehrt, zu bewegen. Daher können für Bodenbearbeitungstätigkeiten, die einen Flächenteilbereich 9,10,11,13 des Stockwerkes 18 betreffen ausschließlich die in dem Stockwerk 18 befindlichen Bodenbearbeitungsgeräte 1, 2 und 4 verwendet werden. Analoges gilt für die Bodenbearbeitungsgeräte 3 und 5, die sich auf dem anderen Stockwerk 19 mit den Flächenteilbereichen 12, 14 befinden. Im Folgen wird der Sortieralgorithmus näher beschrieben, welcher die Eintragungen in der Tabelle 20 betreffend die Auswahl von Bodenbearbeitungsgeräten 1 bis 5 bewirkt. Die wesentliche Grundlage für die in der Tabelle 20 enthaltenen Informationen bildet die gemeinsame Umgebungskarte 8. Aus dieser sind beispielsweise die Bodenartbezeichnung 16 und die Flächeninformation 30 sowie die Verschmutzungsinformation 21 bekannt. Der Nutzer gibt hier beispielsweise zudem die jeweilige Teilbereichsbezeichnung 15 und das Stockwerk 18, 19 in die Umgebungskarte 8 oder direkt in die Tabelle 20 ein.

Der Bodenbearbeitungsbefehl 17 enthält in dem dargestellten Ausführungsbeispiel eine Information darüber, welcher Flächenteilbereich 9 bis 14 gereinigt werden soll, sowie gegebenenfalls wann die Reinigung gestartet und/ oder beendet sein soll und welche Art der Reinigung durchgeführt werden soll. Liegt eine der genannten Informationen nicht vor, so kann diese von dem Nutzer aktiv angefordert werden, beispielsweise durch eine auf dem Endgerät 25 angezeigte Aufforderung. Alternativ kann bei nicht ausreichend angegebener Spezifizierung auch eine Standardreinigung durchgeführt werden, für welche Parameter definiert sind. Wenn zum Beispiel die Art der Reinigung nicht angegeben ist, erfolgt die dafür definierte Standardreinigung "Trockenreinigung". Sofern verfügbar, wird aus dem Bodenbearbeitungsbefehl 17 des Nutzers in das Feld "Zeitangabe" 24 der Ausführungszeitpunkt und in das Feld "Tätigkeit/Typ" die Art der auszuführenden Reinigung "trocken" und/oder "nass" eingetragen. Dafür wird hier bestimmt, dass Teppiche und Teppichböden nur trocken gereinigt werden und Hartböden sowie Holzböden sowohl trocken als auch feucht gereinigt werden. Dem Flächenteilbereich 10 "Wohnzimmer" wird der korrespondierende Bodenbearbeitungsbefehl 17 zweimal zugeordnet, nämlich einmal für die Bodenart 16 "Holzboden" und einmal für die Bodenart 16 "Teppich". Da auf dem zugehörigen Stockwerk 18 sowohl Bodenbearbeitungsgeräte 1, 2 vorhanden sind, die eine Trockenreinigung ausführen können, als auch ein Bodenbearbeitungsgerät 4, welches eine Wischreinigung ausführen kann, wird für die Bodenart 16 sowohl eine "Trockenreinigung", als auch eine "Feuchtreinigung" eingeplant.

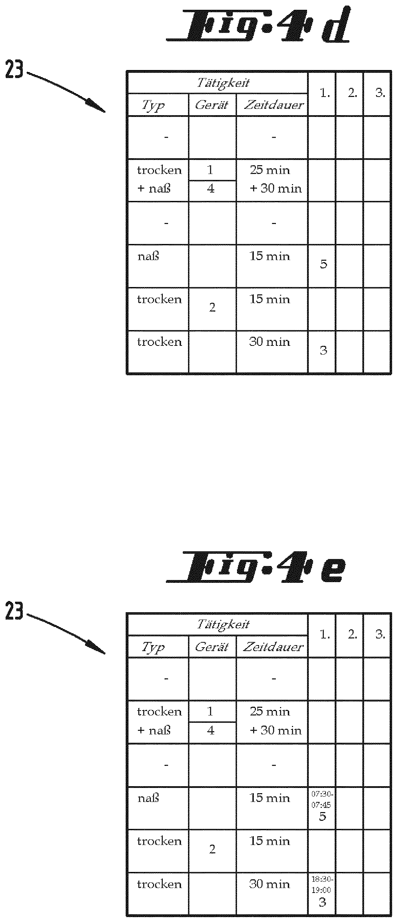

Für die Reinigung der Flächenteilbereiche 12 "Bad" und 14 "Schlafzimmer" wurde in dem Feld "Ausstehende Anfragen" eine Zeitangabe 24 eingetragen. Die Reinigung des Flächenteilbereiches 12 wird zu dem eingetragenen Zeitpunkt (07:30 Uhr) gestartet. Die Reinigung wird durch das Bodenbearbeitungsgerät 5 ausgeführt. Zur Reinigung des Flächenteilbereiches 14 "Schlafzimmer" wird das Bodenbearbeitungsgerät 3 eingesetzt, welches sich wie der Flächenteilbereich 14 in dem Stockwerk 19 "Obergeschoss" befindet. Bezüglich des Flächenteilbereiches 14 ist die Besonderheit, dass die Bodenbearbeitungstätigkeit zu einem definierten Zeitpunkt beendet sein muss, nämlich hier um 19:00 Uhr. Die Recheneinrichtung 6 ermittelt dafür, zu welchem Zeitpunkt das Bodenbearbeitungsgerät 3 mit der Bodenbearbeitungstätigkeit beginnen muss, damit die Forderung erfüllt wird. Da als voraussichtliche Ausführungszeitspanne 23 für die Bodenbearbeitungstätigkeit durch das Bodenbearbeitungsgerät 3 hier eine Zeitdauer von 30 Minuten kalkuliert wurde, ergibt sich als Startzeitpunkt für die Reinigung des Schlafzimmers die Uhrzeit 18:30 Uhr (siehe Figur 4e). Die Kalkulation der benötigten Ausführungszeitspanne 23 erfolgt auf der Basis der bekannten Parameter Flächeninformation 30, Verschmutzungsinformation 21 sowie Geräteparametern des entsprechenden Bodenbearbeitungsgerätes 1 bis 5, nämlich beispielsweise dessen aktuellem Akkufüllstand, typischer Reinigungsleistung und dergleichen. Die Schätzung für die voraussichtliche Ausführungszeitspanne 23 wird in der betreffenden Spalte "Zeitdauer" angegeben. Dieser Wert kann zudem aus früheren Bodenbearbeitungstätigkeiten oder anhand von global definierten Erfahrungswerten ermittelt werden.

Der von der Recheneinrichtung 6 verwendete Sortieralgorithmus, welcher die Rangfolge der Bodenbearbeitungsgeräte 1 bis 5 in den letzten drei Spalten der Tabelle 20 bestimmt, basiert auf definierten Regeln, welche hier beispielsweise in der nachstehend beschriebenen Reihenfolge abgearbeitet werden.

Eine erste Regel gibt beispielsweise vor, dass ein bestimmtes Bodenbearbeitungsgerät 1 bis 5 für eine Bodenbearbeitungstätigkeit in einem Flächenteilbereich 9 bis 14 geplant wird, wenn zwischen der aktuellen Position des Bodenbearbeitungsgerätes 1 bis 5 und der Position des zu reinigenden Flächenteilbereiches 9 bis 14 ein Fortbewegungspfad existiert, der von dem Bodenbearbeitungsgerät 1 bis 5 erfolgreich genommen werden kann. Ein Fortbewegungspfad existiert in diesem Sinne nicht, wenn sich der Flächenteilbereich 9 bis 14 und das Bodenbearbeitungsgerät 1 bis 5 nicht auf demselben Stockwerk 18, 19 befinden und das Bodenbearbeitungsgerät 1 bis 5 somit nicht in der Lage ist, sich zu dem Flächenteilbereich 9 bis 14 hinzubewegen. Des Weiteren existiert ein Fortbewegungspfad beispielsweise nicht, wenn es sich bei dem Bodenbearbeitungsgerät 1 bis 5 um einen Wischroboter handelt, der einen in dem Fortbewegungspfad befindlichen Teppich nicht überqueren kann.

Eine zweite Regel des Sortieralgorithmus kann vorgeben, dass all diejenigen Bodenbearbeitungsgeräte 1 bis 5 von der Ausführung einer bestimmten Bodenbearbeitungstätigkeit ausgeschlossen werden, die die Spezifikation des Tätigkeitstyps nicht erfüllen, nämlich beispielsweise "Trockenreinigung" oder "Nassreinigung". Ein Wischroboter kann somit nicht für eine Trockenreinigung eingesetzt werden, ein Saugroboter nicht für eine Wischreinigung.

Eine weitere Regel sieht hier beispielsweise vor, dass die in den drei rechten Spalten der Tabelle 20 geplanten Bodenbearbeitungsgeräte 1 bis 5 bezüglich einer Rangfolge entsprechend einer Distanz zu dem zu bearbeitenden Flächenteilbereich 9 bis 14, der Größe des Flächenteilbereiches 9 bis 14, der Verschmutzung des Flächenteilbereiches 9 bis 14 und des Füllstands eines Akkumulators des betreffenden Bodenbearbeitungsgerätes 1 bis 5 sortiert werden.

Zusammengefasst wird die Rangfolge, welche die Eignung eines Bodenbearbeitungsgerätes 1 bis 5 für eine bestimmte Bodenbearbeitungstätigkeit angibt, in Abhängigkeit von den Geräteparametern der Bodenbearbeitungsgeräte 1 bis 5 sowie den räumlichen Gegebenheiten der Flächenteilbereiche 9 bis 14 festgelegt.

Insbesondere wird hier beispielsweise eine Kennzahl "Ki" berechnet, die von einem Abstand "Di" des Bodenbearbeitungsgerätes zu dem zu bearbeitenden Flächenteilbereich 9 bis 14 abhängt, sowie von einer Flächenkenngröße "Ci" und einer Verschmutzungskenngröße "Pi". Die Kennzahl berechnet sich dabei nach der Formel

$$Ki = Di/\max(Di, i) + Ci/\max(Ci, i) + Pi/\max(Pi, i).$$

Die Kenngröße "Ci" ergibt sich dabei als exp(Ad1-A). Die Kenngrößer "Pi" ergibt sich als exp(A*S-V1*F1). "Ci" beschreibt den Zusammenhang zwischen der Reinigungsfläche "A" und einer geschätzten Fläche "Adi", die der Roboter mit einer aktuellen Akkuladung reinigen kann. Diese Kenngröße führt dazu, dass Bodenbearbeitungsgeräte 1 bis 5 zur Reinigung eines Flächenteilbereiches 9 bis 14 bevorzugt werden, die in der Lage sind, mit ihrer aktuellen Akkuladung den Flächenteilbereich 9 bis 14 vollständig zu bearbeiten. Die Größe "Pi" beschreibt den Zusammenhang zwischen der Verschmutzung "S" des Flächenteilbereiches 9 bis 14 (erfasst in der Tabelle 20 als Verschmutzungsinformation 21) und dem Füllstand "V" des Schmutzbehälters des Bodenbearbeitungsgerätes 1 bis 5. F beschreibt einen Parameter der anzeigt, wieviel Schmutz der Schmutzbehälter maximal aufnehmen kann. Die hier verwendete Exponentialfunktion "exp" ist lediglich eine beispielhafte Funktion, die zur Sortierung der Bodenbearbeitungsgeräte 1 bis 5 verwendet werden kann. Im Ergebnis kann das Bodenbearbeitungsgerät 1 bis 5 mit der geringsten Kennzahl "Ki" die Bodenbearbeitungstätigkeit am besten erfüllen.

Basierend auf der durch die Rangfolge der Bodenbearbeitungsgeräte 1 bis 5 definierten Warteschlange der Tabelle 20 (die drei letzten, rechts aufgelisteten Spalten der Tabelle 20) werden die Bodenbearbeitungsgeräte 1 bis 5 für geplante Bodenbearbeitungsvorgänge gesteuert. Dabei sind die Bodenbearbeitungsgeräte 1 bis 5 wie zuvor erläutert entsprechend ihrer Eignung bestimmten Bodenbearbeitungtätigkeiten in den Flächenteilbereichen 9 bis 14 zugeordnet. Die Figuren 3 und 4a zeigen den Ausgangszustand der Planung in der Tabelle 20. In Figur 4b wurde dem Bodenbearbeitungsgerät 2 ein Reinigungsauftrag für den Flächenteilbereich 13 zugewiesen und das Bodenbearbeitungsgerät 2 wurde entsprechend aus allen Warteschlangen der Tabelle 20 gelöscht. In Figur 4c wurde das Bodenbearbeitungsgerät 1 der Trockenreinigung des Flächenteilbereiches 10 zugeordnet und aus allen anderen Warteschlangen entfernt. In Figur 4d wurde das Bodenbearbeitungsgerät 4 der Nassreinigung des Flächenteilbereiches 10 zugeordnet und aus den anderen Warteschlangen entfernt, so dass es in dem Stockwerk 18 (Erdgeschoss) keine weiteren Bodenbearbeitungsgeräte 1 bis 5 mehr gibt, die aktuell für eine Bodenbearbeitungstätigkeit zur Verfügung stehen. In Figur 4e wurde den Bodenbearbeitungstätigkeiten für die Flächenteilbereiche 12 und 14 die Zeitangabe 24 für die ausstehenden Anfragen zugeordnet. Die Bodenbearbeitungsgeräte 3 und 5 werden einer Bodenbearbeitungstätigkeit in der Tabelle 20 allerdings erst dann zugeordnet, wenn die entsprechende Bodenbearbeitungstätigkeit auch tatsächlich gestartet wird.

Die Sortierung der Bodenbearbeitungsgeräte 1 bis 5 in der Rangfolge/ Warteschlange erfolgt vorzugsweise so, dass ein Flächenteilbereich 9 bis 14 nicht bearbeitet werden kann, wenn die Spalte "1." kein Bodenbearbeitungsgerät 1 bis 5 für diesen Flächenteilbereich 9 bis 14 enthält. Konkret bedeutet dies dann, dass alle verfügbaren Bodenbearbeitungsgeräte 1 bis 5 bereits mit anderen Bodenbearbeitungstätigkeiten beschäftigt sind. Wenn ein Flächenteilbereich 9 bis 14 sowohl trocken als auch feucht bearbeitet werden soll, dann wird zuerst eine Trockenreinigung durch eines der Bodenbearbeitungsgeräte 1 bis 3 geplant und anschließend erst eine Feuchtreinigung durch eines der Bodenbearbeitungsgeräte 4 und 5. Die Bodenbearbeitungsgeräte 1 bis 5 werden dabei vorzugsweise immer zuerst der Bearbeitung von Hartböden oder Holzböden zugeordnet und erst dann zur Reinigung von Teppichen bzw. Teppichböden. Mit dieser Regel kann erreicht werden, dass in dem Fall, dass sowohl eine Trockenreinigung als auch eine Feuchtreinigung durchgeführt werden soll, Bodenbearbeitungsgeräte 1 bis 5 nicht durch das Reinigen von Teppichen bzw. Teppichböden blockiert werden, was nämlich wiederum dazu führen würde, dass die ebenfalls für die Hartböden oder Holzböden eingeplanten Feuchtreinigungsgeräte erst verspätet zum Einsatz kommen könnten. Des Weiteren wird vorzugsweise vorgeschlagen, dass die Tabelle 20 zeitlich betrachtet von oben nach unten gemäß der Reihenfolge der aufgelisteten Flächenteilbereiche 9 bis 14 bearbeitet wird. Eine bevorzugte Bearbeitung eines bestimmten Flächenteilbereiches 9 bis 14 kann somit dadurch erreicht werden, dass der entsprechende Flächenteilbereich 9 bis 14 in der Tabelle 20 in die oberste Zeile gesetzt wird.

In dem Fall, dass, wie insbesondere in Figur 4e gezeigt, eine Bodenbearbeitung zu einem definierten Zeitpunkt gestartet oder beendet sein muss, oder ein Zeitintervall für die Reinigung von dem Nutzer vorgegeben wird, muss mittels der Recheneinrichtung 6 entschieden werden, wann welches Bodenbearbeitungsgerät 1 bis 5 für die Bodenbearbeitungstätigkeit zur Verfügung steht. In dem vorliegenden Ausführungsbeispiel muss die Reinigung des Flächenteilbereiches 12 spätestens um 18:30 Uhr gestartet werden, damit diese wie von dem Nutzer gewünscht um 19:00 Uhr beendet ist. Wichtig ist, dass das Bodenbearbeitungsgerät 5 zur Bearbeitung des Flächenteilbereiches 12 zu der definierten Zeit reserviert wird und zwar so, dass zum Startzeitpunkt (Zeitangabe 24) das Bodenbearbeitungsgerät 5 zur Verfügung steht und eine für eine erfolgreiche Ausführung der Bodenbearbeitungstätigkeit mindestens benötigte Akkuladung aufweist. Die geschätzte Ausführungszeitspanne 23 wird auch verwendet, um die Startzeit für die Bodenbearbeitungstätigkeit festzulegen, so dass zur gewünschten Endzeit die Bodenbearbeitungstätigkeit auch abgeschlossen ist. Die Ausführungszeitspanne 23 kann beispielsweise aus früheren Bodenbearbeitungstätigkeiten bekannt sein oder durch eine Erkundungsfahrt bestimmt worden sein. Mit der geschätzten Ausführungszeitspanne 23 kann zudem auch direkt überprüft werden, ob der von dem Nutzer geäußerte Bodenbearbeitungsbefehl 17 auch tatsächlich umgesetzt werden kann.

In dem Fall, dass eine gewünschte Bodenbearbeitungstätigkeit durch ein Bodenbearbeitungsgerät 1 bis 5 nicht erfüllt werden kann, kann der Flächenteilbereich 9 bis 14 in Unterteilbereiche zerlegt werden. In der Tabelle 20 entstehen dann weitere Zeilen für die Unterteilbereich der Flächenteilbereiche 9 bis 14. Sofern der Nutzerbefehl gar nicht erfüllt werden kann, kann dem Nutzer alternativ beispielsweise ein Vorschlag gemacht werden, wie und auf welche Weise der betreffende Flächenteilbereich 9 bis 14 doch noch bearbeitet werden kann.

Obwohl dies hier nicht dargestellt ist, kann der Nutzer selbstverständlich noch viele andere Bodenbearbeitungsbefehle 17 an die Recheneinrichtung 6 des Systems übermitteln. Weitere Beispiele sind Befehle wie "Reinige alle Teppiche im Erdgeschoss", "Reinige alle Hartböden", "Reinige alle Räume, die stark verschmutzt sind" und andere.

### Liste der Bezugszeichen

| | | | |
|---|---|---|---|
| 1 | Bodenbearbeitungsgerät | 27 | Bürste |
| 2 | Bodenbearbeitungsgerät | 28 | Wischelement |
| 3 | Bodenbearbeitungsgerät | 29 | Navigations- und Selbstlokali-sationseinrichtung |
| 4 | Bodenbearbeitungsgerät | | |
| 5 | Bodenbearbeitungsgerät | 30 | Flächeninformation |
| 6 | Recheneinrichtung | | |
| 7 | Datenbank | | |
| 8 | Umgebungskarte | | |
| 9 | Flächenteilbereich | | |
| 10 | Flächenteilbereich | | |
| 11 | Flächenteilbereich | | |
| 12 | Flächenteilbereich | | |
| 13 | Flächenteilbereich | | |
| 14 | Flächenteilbereich | | |
| 15 | Teilbereichsbezeichnung | | |
| 16 | Bodenartbezeichnung | | |
| 17 | Bodenbearbeitungsbefehl | | |
| 18 | Stockwerk | | |
| 19 | Stockwerk | | |
| 20 | Tabelle | | |
| 21 | Verschmutzungsinformation | | |
| 22 | Zeitangabe | | |
| 23 | Ausführungszeitspanne | | |
| 24 | Zeitangabe | | |
| 25 | Endgerät | | |
| 26 | Rad | | |

### Patentansprüche

1. System mit mindestens zwei sich selbsttätig fortbewegenden Bodenbearbeitungsgeräten (1, 2, 3, 4, 5) zur automatisch gesteuerten Bearbeitung einer Fläche einer Umgebung, einer den Bodenbearbeitungsgeräten (1,2,3, 4,5) gemeinsam zugeordneten Recheneinrichtung (6), welche mindestens eine Einsatztätigkeit mindestens eines Bodenbearbeitungsgerätes (1, 2, 3, 4,5) nach definierten Regeln plant, und einer den Bodenbearbeitungsgeräten (1, 2,3,4,5) gemeinsam zugeordneten Datenbank (7), in welcher eine Umgebungskarte (8) mit mehreren Flächenteilbereichen (9, 10,11,12, 13, 14) und die geplante Einsatztätigkeit gespeichert sind, **dadurch gekennzeichnet, dass** den Flächenteilbereichen (9,10,11,12,13,14) zugehörig eine Teilbereichsbezeichnung (15) und/oder eine Bodenartbezeichnung (16) gespeichert ist, wobei die Recheneinrichtung (6) eingerichtet ist, einen Bodenbearbeitungsbefehl (17) von einem Nutzer des Systems zu empfangen, welcher Bodenbearbeitungsbefehl (17) einerseits eine Angabe einer auszuführenden Bodenbearbeitungstätigkeit und andererseits eine Teilbereichsbezeichnung (15) und/ oder Bodenartbezeichnung (16) aufweist, wobei die Recheneinrichtung (6) eingerichtet ist, zu der in dem Bodenbearbeitungsbefehl (17) benannten Teilbereichsbezeichnung (15) und/ oder Bodenartbezeichnung (16) korrespondierende Flächenteilbereiche (9,10, 11,12, 13, 14) aus der Mehrzahl der in der Umgebungskarte (8) enthaltenen Flächenteilbereiche (9,10,11,12, 13, 14) zu ermitteln und die in dem Bodenbearbeitungsbefehl (17) benannte Bodenbearbeitungstätigkeit nach den vordefinierten Regeln zur Ausführung durch mindestens ein Bodenbearbeitungsgerät (1, 2,3,4,5) zu planen, wobei die vordefinierten Regeln abhängig sind von einem Geräteparameter des Bodenbearbeitungsgerätes (1, 2,3, 4, 5) und einer Position des zu bearbeitenden Flächenteilbereiches (9, 10, 11, 12, 13, 14) in der Umgebung.

**2.** System nach Anspruch 1, **dadurch gekennzeichnet, dass** der Bodenbearbeitungsbefehl (17) eine aus mehreren Wörtern bestehende Aufforderung, insbesondere ein Sprachbefehl, ist, wobei die Recheneinrichtung (6) eingerichtet ist, aus dem Bodenbearbeitungsbefehl (17) einerseits die Angabe der Bodenbearbeitungstätigkeit, und andererseits die Teilbereichsbezeichnung (15) und/ oder die Bodenartbezeichnung (16), sowie gegebenenfalls einen die Bodenbearbeitung betreffenden Zeitpunkt, zu entnehmen.

**3.** System nach Anspruch 1 oder 2, **dadurch gekennzeichnet, dass** der Geräteparameter des Bodenbearbeitungsgerätes (1, 2, 3, 4,5) ein für eine definierte Bodenbearbeitungstätigkeit ausgebildetes Bodenbearbeitungselement, eine Gerätegröße, ein Ladezustand eines Akkumulators, eine Leistungsstufe eines Elektromotors, eine Aufnahmekapazität eines Sammelbehälters und/ oder eine Reichweite, Fortbewegungsgeschwindigkeit oder Kletterfähigkeit des Bodenbearbeitungsgerätes (1, 2, 3, 4, 5) ist.

**4.** System nach einem der vorhergehenden Ansprüche, **dadurch gekennzeichnet, dass** das zur Ausführung der Bodenbearbeitungstätigkeit bestimmte Bodenbearbeitungsgerät (1, 2,3, 4, 5) abhängig von einer Entfernung und/oder einem Höhenunterschied zwischen einem Ort des zu bearbeitenden Flächenteilbereiches (9,10,11, 12,13,14) und einer aktuellen Position des Bodenbearbeitungsgerätes (1, 2, 3, 4, 5) ausgewählt ist.

**5.** System nach einem der vorhergehenden Ansprüche, **dadurch gekennzeichnet, dass** die Datenbank (7) Informationen zu den Flächenteilbereichen (9, 10,11, 12, 13, 14) der Umgebung aufweist, insbesondere die Teilbereichsbezeichnung (15), eine Stockwerkinformation betreffend ein den Flächenteilbereich (9,10, 11,12, 13,14) aufweisendes Stockwerk (18,19) eines Gebäudes, die Bodenartbezeichnung (16) und/ oder eine Flächengröße des Flächenteilbereiches (9, 10,11, 12,13,14).

**6.** System nach einem der vorhergehenden Ansprüche, **dadurch gekennzeichnet, dass** die Datenbank (7) des Weiteren eine Verschmutzungsinformation (21) des Flächenteilbereiches (9, 10,11,12, 13, 14) und/ oder eine Zeitangabe (22) einer zuletzt in dem Flächenteilbereich (9, 10, 11,12, 13, 14) ausgeführten Bodenbearbeitungstätigkeit und/oder eine Zeitangabe (24) einer geplanten Bodenbearbeitungstätigkeit und/oder eine geschätzte Ausführungszeitspanne (23) für eine Ausführung einer Bodenbearbeitungstätigkeit und/oder eine Information über eine dem Flächenteilbereich (9, 10, 11, 12, 13, 14) zugeordnete Art der Bodenbearbeitungstätigkeit enthält.

**7.** System nach einem der vorhergehenden Ansprüche, **dadurch gekennzeichnet, dass** die Datenbank (7) den Flächenteilbereichen (9,10,11,12,13, 14) zugeordnet, eine oder mehrere zeitlich im Voraus geplante Bodenbearbeitungstätigkeiten eines oder mehrerer Bodenbearbeitungsgeräte (1, 2, 3,4,5) enthält.

**8.** System nach einem der vorhergehenden Ansprüche, **dadurch gekennzeichnet, dass** die Recheneinrichtung (6) eingerichtet ist, die Zuordnung des Bodenbearbeitungsgerätes (1, 2, 3, 4, 5) zu einem Flächenteilbereich (9, 10, 11, 12, 13, 14) auf der Basis einer nach mathematischen Methoden ermittelten Kennzahl vorzunehmen, welche eine Eignung des Bodenbearbeitungsgerätes (1, 2,3,4,5) zur Ausführung der Bodenbearbeitungstätigkeit in dem Flächenteilbereich (9,10, 11, 12,13, 14) angibt.

**9.** System nach Anspruch 8, **dadurch gekennzeichnet, dass** in der Datenbank (7) einem bestimmten Flächenteilbereich (9, 10, 11, 12, 13, 14) mehrere Bodenbearbeitungsgeräte (1,2,3, 4, 5) gemäß einer Rangfolge zugeordnet sind, wobei die Bodenbearbeitungsgeräte (1, 2,3,4,5) in Abhängigkeit von dem, den Bodenbearbeitungsgeräten (1, 2, 3, 4, 5) zugeordneten Kennzahlen zur Bearbeitung desselben Flächenteilbereiches (9, 10, 11,12, 13, 14) geplant sind.

**10.** Verfahren zum Betrieb eines nach einem der vorhergehenden Ansprüche ausgebildeten Systems.

**Claims**

**1.** A system with at least two automatically moving floor processing devices (1, 2, 3, 4, 5) for the automatically controlled processing of a surface in an environment, a shared computing device (6) allocated to the floor processing devices (1, 2, 3, 4, 5), which plans at least one operational activity of at least one floor processing device (1, 2, 3, 4, 5) based on defined rules, and a shared database (7) allocated to the floor processing devices (1, 2, 3, 4, 5), which stores an area map (8) with several partial surface areas (9, 10, 11, 12, 13, 14) and the planned operational activity, **characterized in that** a partial area designation (15) and/or a floor type designation (16) associated with the partial surface areas (9, 10, 11, 12, 13, 14) is stored, wherein the computing device (6) is set up to receive a floor processing command (17) from a user of the system, with this floor processing command (17) on the one hand indicating a floor processing activity to be performed, and on the other hand having a partial area designation (15) and/or a floor type designation (16), wherein the computing device (6) is set up to ascertain partial surface areas (9, 10, 11, 12, 13, 14) out of the plurality of partial surface areas (9, 10, 11, 12, 13, 14) contained in the area map (8) that correspond to the partial area designation (15) and/or floor type designation (16) specified in the floor processing command (17), and according to the predefined rules to plan the performance of the floor processing activity specified in the floor processing command (17) by at least one floor processing device (1, 2, 3, 4, 5), wherein the predefined rules depend on a device parameter of the floor processing device (1, 2, 3, 4, 5) and a position of the partial surface area (9, 10, 11, 12, 13, 14) in the environment to be processed.

2. The system according to claim 1, **characterized in that** the floor processing command (17) is a request comprised of several words, in particular a voice command, wherein the computing device (6) is set up to derive from the floor processing command (17) the indicated floor processing activity on the one hand, and the partial area designation (15) and/or the floor type designation (16) on the other, and possibly also a point in time relating to the floor processing operation.

3. The system according to claim 1 or 2, **characterized in that** the device parameter of the floor processing device (1, 2, 3, 4, 5) is a floor processing element designed for a defined floor processing activity, a device variable, a charge status of an accumulator, a power level of an electric motor, a storage capacity of a collection container and/or a range, traveling speed or climbing ability of the floor processing device (1, 2, 3, 4, 5).

4. The system according to one of the preceding claims, **characterized in that** the floor processing device (1, 2, 3, 4, 5) specified for performing the floor processing activity is selected as a function of a distance and/or a height difference between the location of the partial surface area (9, 10, 11, 12, 13, 14) to be processed and a current position of the floor processing device (1, 2, 3, 4, 5).

5. The system according to one of the preceding claims, **characterized in that** the database (7) of the system has information about the partial surface areas (9, 10, 11, 12, 13, 14) of the environment, in particular a partial area designation (15), floor information relating to a floor (18, 19) of a building having the partial surface area (9, 10, 11, 12, 13, 14), a floor type designation (16) and/or a surface size of the partial surface area (9, 10, 11, 12, 13, 14).

6. The system according to one of the preceding claims, **characterized in that** the database (7) also contains contamination information (21) for the partial surface area (9, 10, 11, 12, 13, 14) and/or a time specification (22) for a floor processing activity performed last in the partial surface area (9, 10, 11, 12, 13, 14) and/or a time specification (24) for a planned floor processing activity and/or an estimated performance timespan (23) for performing a floor processing activity and/or information about the type of floor processing activity allocated to the partial surface area (9, 10, 11, 12, 13, 14).

7. The system according to one of the preceding claims, **characterized in that** the database (7) contains one or several floor processing activities chronologically planned in advance for one or several floor processing devices (1, 2, 3, 4, 5) and allocated to the partial surface areas (9, 10, 11, 12, 13, 14).

8. The system according to one of the preceding claims, **characterized in that** the computing device (6) is set up to allocate the floor processing device (1, 2, 3, 4, 5) to a partial surface area (9, 10, 11, 12, 13, 14) based upon a ratio determined according to mathematical methods, which indicates a suitability of the floor processing device (1, 2, 3, 4, 5) for performing the floor processing activity in the partial surface area (9, 10, 11, 12, 13, 14).

9. The system according to claim 8, **characterized in that** several floor processing devices (1, 2, 3, 4, 5) are allocated to a specific partial surface area (9, 10, 11, 12, 13, 14) in the database (7) based on an order of priority, wherein the floor processing devices (1, 2, 3, 4, 5) are planned for processing the same partial surface area (9, 10, 11, 12, 13, 14) as a function of the ratios allocated to the floor processing devices (1, 2, 3, 4, 5).

10. A method for operating a system configured according to one of the preceding claims.

**Revendications**

1. Système comprenant au moins deux appareils de traitement du sol (1, 2, 3, 4, 5) se déplaçant automatiquement pour le traitement commandé automatiquement d'une surface d'un environnement, un dispositif de calcul (6) associé en commun aux appareils de traitement du sol (1, 2, 3, 4, 5), qui planifie au moins une opération d'intervention d'au moins un appareil de traitement du sol (1, 2, 3, 4, 5) selon des règles définies et une banque de données (7) associée en commun aux appareils de traitement du sol (1, 2, 3, 4, 5) dans laquelle sont mémorisées une carte d'environnement (8) avec plusieurs zones partielles de surface (9, 10, 11, 12, 13, 14) et l'opération d'intervention planifiée, **caractérisé en ce qu'**une désignation de zone partielle (15) et/ou une désignation de type de sol (16) est mémorisée en association avec les zones partielles de surface (9, 10, 11, 12, 13, 14), le dispositif de calcul (6) étant configuré pour recevoir un ordre de traitement du sol (17) d'un utilisateur du système lequel ordre de traitement du sol (17) comprend d'une part une indication d'une opération de traitement du sol à effectuer et d'autre part une désignation de zone partielle (15) et/ou une désignation de type de sol (16), le dispositif de calcul (6) étant configuré pour déterminer, à partir de la pluralité des zones partielles de surface (9, 10, 11, 12, 13, 14) contenues dans la carte d'environnement (8), les zones partielles de surface (9, 10, 11, 12, 13, 14) correspondant à la désignation de zone partielle (15) et/ou à la désignation de type de sol (16) désignée dans l'ordre de traitement du sol (17) et de planifier l'opération de traitement du sol désignée dans l'ordre de traitement du sol (17) selon les règles prédéfinies pour l'exécution par au moins un appareil de traitement du sol (1, 2, 3, 4, 5), les règles prédéfinies dépendant d'un paramètre de l'appareil de traitement du sol (1, 2, 3, 4, 5) et d'une position de la zone partielle de surface à traiter (9, 10, 11, 12, 13, 14) dans l'environnement.

2. Système selon la revendication 1, **caractérisé en ce que** l'ordre de traitement du sol (17) est une demande composée de plusieurs mots, en particulier un ordre vocal, le dispositif de calcul (6) étant configuré pour extraire de l'ordre de traitement du sol (17), d'une part, l'indication de l'opération de traitement du sol et, d'autre part, la désignation de la zone partielle (15) et/ou de la désignation du type de sol (16), ainsi que, le cas échéant, un moment concernant le traitement du sol.

3. Système selon la revendication 1 ou 2, **caractérisé en ce que** le paramètre de l'appareil de traitement du sol (1, 2, 3, 4, 5) est un élément de traitement du sol conçu pour une opération de traitement du sol définie, une taille d'appareil, un état de charge d'un accumulateur, un niveau de puissance d'un moteur électrique, une capacité de réception d'un réservoir collecteur et/ou une portée, une vitesse de déplacement ou une capacité de grimper de l'appareil de traitement du sol (1, 2, 3, 4, 5).

4. Système selon l'une des revendications précédentes, **caractérisé en ce que** l'appareil de traitement du sol (1, 2, 3, 4, 5) retenu pour effectuer l'opération de traitement du sol est sélectionné en fonction d'une distance et/ou d'une différence de hauteur entre un lieu de la zone partielle de surface (9, 10, 11, 12, 13, 14) à traiter et une position actuelle de l'appareil de traitement du sol (1, 2, 3, 4, 5).

5. Système selon l'une des revendications précédentes, **caractérisé en ce que** la base de données (7) comporte des informations sur les zones partielles de surface (9, 10, 11, 12, 13, 14) de l'environnement, en particulier la désignation de zone partielle (15), une information d'étage concernant un étage (18, 19) d'un bâtiment présentant la zone partielle de surface (9, 10, 11, 12, 13, 14), la désignation du type de sol (16) et/ou une taille de surface de la zone partielle de surface (9, 10, 11, 12, 13, 14).

6. Système selon l'une des revendications précédentes, **caractérisé en ce que** la base de données (7) contient en outre une information de salissure (21) de la zone partielle de surface (9, 10, 11, 12, 13, 14) et/ou une indication dans le temps d'une dernière opération de traitement du sol exécutée dans la zone partielle de surface (9, 10, 11, 12, 13, 14) et/ou une indication dans le temps (24) d'une opération de traitement du sol planifiée et/ou une durée d'exécution estimée (23) pour une exécution d'une opération de traitement du sol et/ou une information sur un type d'opération de traitement du sol attribué à la zone partielle de surface (9, 10, 11, 12, 13, 14).

7. Système selon l'une des revendications précédentes, **caractérisé en ce que** la base de données (7) contient, associée aux zones partielles de surface (9, 10, 11, 12, 13, 14), une ou plusieurs opérations de traitement du sol planifiées à l'avance dans le temps d'un ou plusieurs appareils de traitement du sol (1, 2, 3, 4, 5).

8. Système selon l'une des revendications précédentes, **caractérisé en ce que** le dispositif de calcul (6) est configuré pour procéder à l'affectation de l'appareil de traitement du sol (1, 2, 3, 4, 5) à une zone partielle de surface (9, 10, 11, 12, 13, 14) sur la base d'un indice déterminé selon des méthodes mathématiques, qui indique une aptitude de l'appareil de traitement du sol (1, 2, 3, 4, 5) à exécuter l'opération de traitement du sol dans la zone partielle de surface (9, 10, 11, 12, 13, 14).

**9.** Système selon la revendication 8, **caractérisé en ce que** dans la base de données (7), plusieurs appareils de traitement du sol (1, 2, 3, 4, 5) sont associés à une zone partielle de surface déterminée (9, 10, 11, 12, 13, 14) selon un ordre de priorité, les appareils de traitement du sol (1, 2, 3, 4, 5) étant planifiés pour traiter la même zone partielle de surface (9, 10, 11, 12, 13, 14) en fonction des indices associés aux appareils de traitement du sol (1, 2, 3, 4, 5).

**10.** Procédé de fonctionnement d'un système conçu selon l'une des revendications précédentes.

# Fig.1

17

- Reinige das Wohnzimmer.
- Sorge dafür, dass das Schlafzimmer am Samstag bis 19:00 gesaugt ist.
- Wische das Bad am Sonntag ab 07:30.

25

6 7 20

17

1 29 29 4

27 26 26

26

28

16

Fig. 2

EP 3 825 802 B1

# Fig. 3

| Nr. | Name | Etage | Bodenart | Fläche | Ver- schmutzung | Letzte Reinigung | Ausstehende Anfragen | Tätigkeit | | | 1. | 2. | 3. |
|---|---|---|---|---|---|---|---|---|---|---|---|---|---|
| | | | | | | | | Typ | Gerät | Zeitdauer | | | |
| 9 | Küche | Erd- geschoss | Hartboden | 20 m$^2$ | 80% | 15.03. 11:45 | - | - | - | - | 1 | 4 | 2 |
| 10 | Wohnzimmer | Erd- geschoss | Holzboden | 25 m$^2$ | 20% | 18.03. 17:45 | sofort | trocken + naß | | 25 min + 30 min | 2 / 4 | 1 | |
| 11 | Flur | Erd- geschoss | Hartboden | 10 m$^2$ | 90% | 18.03. 09:30 | - | - | - | - | 4 | 2 | 1 |
| 12 | Bad | Ober- geschoss | Hartboden | 12 m$^2$ | 75% | 17.03. 10:30 | 22.03. 07:30 -x | naß | | 15 min | 5 | | |
| 13 | Wohnzimmer | Erd- geschoss | Teppich | 15 m$^2$ | 40% | 17.03. 15:00 | sofort | trocken | | 15 min | 2 | 1 | |
| 14 | Schlafzimmer | Ober- geschoss | Teppich- boden | 30 m$^2$ | 25% | 15.03. 16:00 | 21.03. x- 19:00 | trocken | | 30 min | 3 | | |

20 15 18,19 16 30 21 22 24 23

## Fig. 4a

**23**

| Tätigkeit | | | 1. | 2. | 3. |
|---|---|---|---|---|---|
| Typ | Gerät | Zeitdauer | | | |
| - | | - | 1 | 4 | 2 |
| trocken + naß | | 25 min + 30 min | 2 / 4 | 1 | |
| - | | - | 4 | 2 | 1 |
| naß | | 15 min | 5 | | |
| trocken | | 15 min | 2 | 1 | |
| trocken | | 30 min | 3 | | |

## Fig. 4b

**23**

| Tätigkeit | | | 1. | 2. | 3. |
|---|---|---|---|---|---|
| Typ | Gerät | Zeitdauer | | | |
| - | | - | 1 | 4 | |
| trocken + naß | | 25 min + 30 min | 1 / 4 | | |
| - | | - | 4 | 1 | |
| naß | | 15 min | 5 | | |
| trocken | 2 | 15 min | 1 | | |
| trocken | | 30 min | 3 | | |

## Fig. 4c

**23**

| Tätigkeit | | | 1. | 2. | 3. |
|---|---|---|---|---|---|
| Typ | Gerät | Zeitdauer | | | |
| - | | - | 4 | | |
| trocken + naß | 1 | 25 min + 30 min | 4 | | |
| - | | - | 4 | | |
| naß | | 15 min | 5 | | |
| trocken | 2 | 15 min | | | |
| trocken | | 30 min | 3 | | |

## Fig. 4 d

23

| Tätigkeit | | | 1. | 2. | 3. |
|---|---|---|---|---|---|
| Typ | Gerät | Zeitdauer | | | |
| - | | - | | | |
| trocken + naß | 1 4 | 25 min + 30 min | | | |
| - | | - | | | |
| naß | | 15 min | 5 | | |
| trocken | 2 | 15 min | | | |
| trocken | | 30 min | 3 | | |

## Fig. 4 e

23

| Tätigkeit | | | 1. | 2. | 3. |
|---|---|---|---|---|---|
| Typ | Gerät | Zeitdauer | | | |
| - | | - | | | |
| trocken + naß | 1 4 | 25 min + 30 min | | | |
| - | | - | | | |
| naß | | 15 min | 07:30-07:45 5 | | |
| trocken | 2 | 15 min | | | |
| trocken | | 30 min | 18:30-19:00 3 | | |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102017113288 A1
- US 20180361569 A1
- EP 3385811 A1